# EUROPEAN PATENT APPLICATION

(11) **EP 4 006 252 A1**
(43) Date of publication of application: **01.06.2022**
(21) Application number: 21020594.4
(22) Date of filing: 25.11.2021
(51) Int. Cl.: E04D 11/00, A01G 9/033, A01G 20/20

(54) **SYSTEM AND METHOD FOR COVERING BUILDINGS**

(30) Priority: 27.11.2020 IT 202000028706
(71) Applicant: VIVAI ONLYMOSO di Fabrizio Pecci, 48018 Faenza (RA) (IT)
(72) Inventor: Pecci, Fabrizio, 47835 Saludecio (RN) (IT)
(74) Representative: Zanotti, Laura

(57) **Abstract**

A building covering system comprising at least one containment unit (2) and at least one plant species (3) having substantially horizontally extending rhizomes (4), wherein the plant species (3) is arranged at least partially inside the containment unit (2).

## Description

The present invention relates to a system and method of covering buildings.

The roof of a building or structure generally consists of a load-bearing structure made of concrete, wood or iron, and a waterproof covering, which may comprise tiles, corrugated sheets and insulated panels.

Recently, in an effort to increase green space, many architectural projects have aimed to integrate buildings and greenery by exploiting every space to insert urban gardens or vegetable patches.

Currently known solutions include green roofs, a roofing system with a vegetated surface arranged along the top horizontal covering of buildings, and green walls, a wall outside the buildings cultivated with vegetation.

Green roofs are generally composed of a "package" of several layers that rests on the roof slab and includes: a root-proof waterproofing layer; a layer separating and protecting the waterproofing layer; a drainage and water storage layer; a filter membrane; a growing medium; and vegetation.

Compared to traditional roofs, green roofs provide several benefits to the building such as protecting its waterproofing, regulating the microclimate by lowering the air temperature in the urban environment, providing thermal insulation and therefore energy savings, reducing the presence of particulate matter, creating new habitats for wildlife, regulating rainwater and lowering the environmental and aesthetic impact.

Nevertheless, green roofs are not without their drawbacks. The vegetation must withstand even extreme conditions without requiring careful and regular maintenance. In addition, the covering is not always stable due to variations in the vegetation over time. There may be areas where the vegetation does not hold, thus creating problems for the covering as well as damaging the aesthetic impact.

In addition, a flat roof can be laborious to implement as it requires several layers. A root-proof membrane is required to reduce the risk of plant roots penetrating the covering and causing cracks. A filter layer is also necessary to retain soil particles and prevent infiltration into the underlying layers. The soil and plants then have to be transported onto the layers.

In addition, coverings of this kind cannot be implemented on sloping roofs. Vertical green walls are currently implemented using three main techniques.

The "green façade" technique involves applying a support structure (grids or metal mesh) to an already completed wall. The sole function of the support structure is to support the vegetation, usually climbing plants. The metal support structure is anchored to the host wall by points, meaning there is a layer of air between the vegetation and the facade.

The "living wall" technique involves using panels and box elements, provided with special irrigation systems, which are fixed to the facades of buildings and are used to house a mixture of plants.

The "plant wall" technique, similar to the "living wall", involves implementing a substrate consisting of a dual layer of synthetic felt. The operator inserts the plants manually, one by one, into special pockets made in the thickness between the two fabrics.

These systems, like the green roof, also have numerous advantages. A vertical green wall protects the building from a thermal-acoustic perspective, collects dust particles caused by pollution and protects the building from solar radiation.

However, implementing vertical green walls is also laborious and has its drawbacks.

In the case of the "green facade", metal grids have to be positioned onto which the plants, which can only be climbing plants, are then anchored.

The "living wall" requires a solid wall for stably placing the panels and box elements containing plants without danger of them collapsing. In addition, the presence of visible elements results in an unnatural appearance.

The "plant wall" has a more natural look, but is more difficult to install and takes a long time to grow the plants inserted between the two layers.

In addition, known systems require an irrigation system, which is often integrated and arranged between the wall and the plant species, making it difficult to implement.

The purpose of the present invention is to provide a "green" covering that is easy to install and maintain and is implementable on flat or sloped roofs or on vertical walls.

The invention fulfils this aim by means of a covering system that has the features defined in claim 1.

The plant species inserted inside the containment unit create a network of rhizomes that quickly extends to the adjacent containment units, making the covering compact and stable.

The covering so implemented does not require maintenance and creates a substrate that reduces the possibility of infiltration. The covering is, therefore, uniform and does not have areas without vegetation.

The invention also relates to a method for covering a building that has the features defined in claim 8.

Further advantages and features of the present invention will become more apparent from the detailed description below with reference to the accompanying drawings, which show a non-limiting embodiment, in which:
- figure 1 shows the covering system in a preferred embodiment;
- figure 2 shows the covering system in figure 1 after plant and rhizome development;
- figure 3 shows the covering system comprising a plurality of containment units;
- figure 4 shows the positioning of the covering system on a sloping roof;
- figure 5 shows the upper part of a cladding to be placed between the external surface of the building and the covering system;
- figure 6 shows the lower part of the cladding in figure 5.

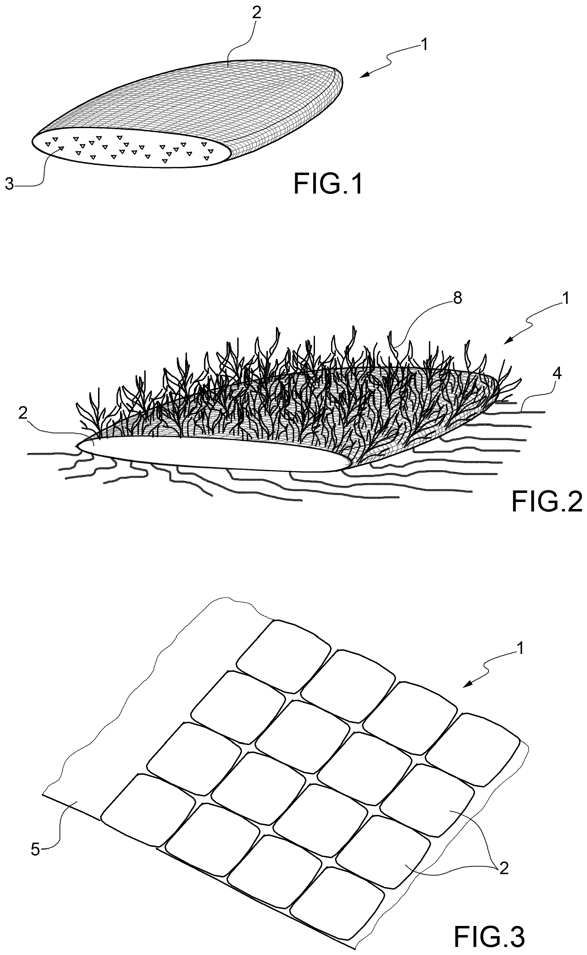

In Figure 1, the number 1 indicates a system for covering a building.

According to the invention, the covering system 1 comprises at least one containment unit 2 and at least one plant species 3 having substantially horizontally extending rhizomes 4, wherein the plant species 3 is arranged at least partially inside the containment unit 2.

Advantageously, the containment unit 2 is substantially shaped like a cushion or sack. The special cushion or sack shape of the containment unit 2 allows it to be easily positioned on an external surface of the building. The containment unit 2 may be variously shaped, such as rectangular, triangular, square or circular. The containment unit 2 may be tubular.

The containment unit 2 preferably has a thickness of 5-10 cm.

A rectangular-shaped containment unit 2 preferably has one side with a length of between 50 and 70 cm and the other side with a length of between 20 and 40 cm. The containment unit 2 is, therefore, easy to transport and store.

The containment unit 2 advantageously comprises such a material as to allow the exit of the rhizomes 4 on one side and the stem of the plant species 3 on the other, as shown in figure 2.

In an advantageous embodiment, the containment unit 2 is made of a substantially biodegradable material. The containment unit 2 is preferably made of jute. Jute is an inexpensive and 100%-degradable natural fibre and, therefore, can be left on the surface without the need for its removal or disposal.

Alternatively, the containment unit 2 may be made of other biodegradable materials such as cotton. The weave of the containment unit 2 material is such as to allow the exit of the rhizomes 4 on one side and the plant stem 8 on the other. In an alternative embodiment, the containment unit 2 is made of a plastic material. However, the plastic material is such as to allow the exit of the rhizomes 4 on one side and the plant stem 8 on the other. The use of a resistant material capable of retaining soil and seeds or plants over time, while still allowing the stem to exit, is particularly recommended in the case of vertical walls.

The plant species 3 is placed inside the containment unit 2 together with soil. Preferably, the rhizomes 4 are already present, and may be contained within the containment unit 2 or protrude from them.

Figure 2 illustrates how the plants 8 and their respective rhizomes 4 extend from opposite sides of the containment unit 2.

In a preferred embodiment shown in figure 3, the system has a modular structure comprising a plurality of containment units 2. The containment units 2 may be arranged adjacent to each other, according to the width of the area to be covered. The different shapes of the containment units 2 allow surfaces of any shape and width to be completely covered.

Unlike common modular systems, the system according to the present invention is uniform and stable because the rhizomes, as they extend, enter the adjacent containment units, creating a dense network. In particular, the plant species 3 inserted inside the containment units 2 create a network of rhizomes 4 that makes the covering more compact and resistant, thus reducing the possibility of infiltration.

The plant species 3 preferably comprise bamboo, in particular pigmy bamboo. The use of bamboo has many advantages. The rhizomes 4 remain at a shallow depth of not more than 40 cm. Eighty percent of the rhizomes 4 develop at a depth of 20 cm. Pygmy bamboo quickly creates a dense network of rhizomes, within around a month of the covering being applied. The rhizomes stop when they encounter barriers such as walls.

Bamboo does not produce flowers or seeds, and is useful for stopping weeds. It does not require special watering and can withstand temperatures ranging from - 25°C to +50°C. Bamboo also does not require any maintenance.

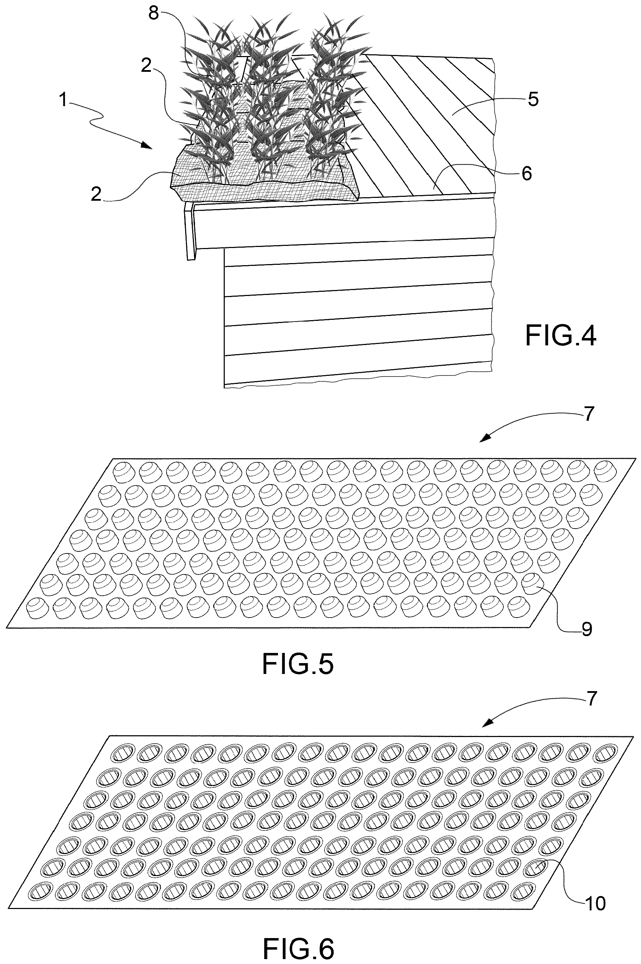

Figure 4 shows the use of the covering system 1 on a sloping roof 5. The rhizomes 4 begin to emerge from the lower part of the cushion 2, extending in a substantially horizontal direction. The containment units 2 are preferably arranged adjacent to each other, so as to create a dense network in a short time. The plant 8 emerges from the upper part of the cushion 2 and, in the case of pygmy bamboo, reaches a maximum height of 40 to 60 cm.

Advantageously, the covering system 1 comprises a cladding 7 suitable for being inserted between the external surface 6 of the building and the containment units 2.

Figure 5 shows the lower part of the cladding 7 in a preferred embodiment. The cladding 7 comprises a sheath with protrusions 9 to guide the horizontal extension of the rhizomes. The protrusions also help keep the containment units 2 in place.

The cladding 7 is arranged on the external surface 6 of the building in such a way that the protrusions 9 face outwards. The containment unit or units 2 are arranged on the side of the cladding 7 provided with the protrusions 9, in particular in contact with the protrusions 9 themselves.

The protrusions 9, therefore, allow the containment unit or units 2 to be arranged while maintaining them in the desired position. In addition, the protrusions 9 help guide the horizontal extension of the rhizomes emerging from the underside of the containment unit 2.

As illustrated in figure 6, the lower part of the cladding preferably has cavities 10 at the protrusions to lighten the structure.

The cladding 7 is arranged on the external surface 6 of the building in such a way that the cavities 10 face the external surface 6 and the protrusions 9 face outwards. The containment unit or units 2 are arranged on the side of the cladding 7 provided with the protrusions 9, in particular in contact with the protrusions 9 themselves.

In an embodiment not shown, the cladding 7 comprises a sheath provided with protrusions 9 on both sides. The cladding 7 has protrusions 9 both on the side on which the containment units 2 are arranged and on the side suitable for being arranged on the external surface 6 of the building. The protrusions 9 are preferably hollow to lighten the structure.

Another aspect of the present invention concerns the method for covering a building, according to which arranged on an external surface 6 of the building are one or more containment units 2 with at least one plant species 3 having substantially horizontally extending rhizomes 4, wherein the plant species 3 is arranged at least partially inside the containment unit 2.

Advantageously, the method envisages a plurality of containment units 2 adjacent to one another.

According to a preferred embodiment, the method comprises the application of a cladding 7 between the external surface 6 of the building and the containment unit 2. In particular, the cladding 6 comprises a cladding 7with protrusions 9 to guide the horizontal extension of the rhizomes.

The cladding 7 is arranged on the external surface 6 of the building in such a way that the protrusions 9 face outwards. The containment unit or units 2 are arranged on the side of the cladding 7 provided with the protrusions 9, in particular in contact with the protrusions 9 themselves.

Preferably, the cladding 7 is fixed, for example with nails, to the external surface 6 so as to remain adherent to the surface itself.

In one embodiment, the method envisages a layer of topsoil being applied over the cladding 7 and then the containment units 2 being applied over the layer of topsoil.

Advantageously, the method envisages the insertion of crossbars, for example of iron or wood, or nets or grids, for example electro-welded, to hold the containment units in position 2. This is particularly advantageous in the case of sloping roofs.

In one embodiment, in particular in the covering of vertical walls, the containment units 2 are fixed to the external surface 6 of the building.

## Claims

1. A system for covering a building, **characterised by** comprising at least one containment unit (2) and at least one plant species (3) having substantially horizontally extending rhizomes (4), wherein the plant species (3) is arranged at least partially inside the containment unit (2).

2. A covering system according to claim 1, **characterised in that** the containment unit (2) is substantially shaped like a cushion or sack.

3. A covering system according to claim 1 or 2, **characterised in that** the plant species (3) comprises bamboo, in particular pygmy bamboo.

4. A covering system according to any one of the preceding claims, **characterised in that** the containment unit (2) comprises such a material as to allow the exit of the rhizomes (4) on one side and the stem of the plant species (3) on the other.

5. A covering system according to any one of the preceding claims, **characterised in that** the containment unit (2) is made of a substantially biodegradable material.

6. A covering system according to any one of the preceding claims, **characterised by** comprising a plurality of adjacently arranged containment units (2).

7. A covering system according to any one of the preceding claims, **characterised by** comprising a cladding (7) suitable for being arranged between the outer surface (6) of the building and one or more containment units (2), in particular a cladding (7) with protrusions (9) to guide the horizontal extension of the rhizomes.

8. A method for covering a building, **characterised by** placing a system (1) according to any one of the preceding claims on an external surface (6) of the building.

9. A method according to claim 8, **characterised by** placing a plurality of containment units (2) adjacent to one another.

10. A method according to claim 8 or 9, **characterised by** fixing the containment unit (2) and/or the cladding (7) to the external surface (6).
